# EUROPÄISCHE PATENTSCHRIFT

(11) **EP 3 020 053 B1**
(45) Veröffentlichungstag und Bekanntmachung des Hinweises auf die Patenterteilung: **19.12.2018**
(21) Anmeldenummer: 14715642.6
(22) Anmeldetag: 08.04.2014
(51) Int. Cl.: H01F 1/057, H01F 41/02

(54) **VERFAHREN ZUR HERSTELLUNG EINES PERMANENTMAGNETEN**
PROCESS OF MANUFACTURING A PERMANENT MAGNET
PROCÉDÉ DE FABRICATION D'UN AIMANT PERMANENT

(30) Priorität: 10.07.2013 DE 102013213494
(43) Veröffentlichungstag der Anmeldung: 18.05.2016
(73) Patentinhaber: Volkswagen Aktiengesellschaft, 38440 Wolfsburg (DE)
(72) Erfinder: ZLATKOV, Branislav, 31804 Braunschweig (DE)
(74) Vertreter: Gulde & Partner
(86) Internationale Anmeldenummer: PCT/EP2014/057088
(87) Internationale Veröffentlichungsnummer: WO 2015/003824

(56) Entgegenhaltungen:
- DE-A1-102009 046 426
- US-A- 5 435 859
- US-A- 5 464 576
- US-A1- 2008 117 008

## Beschreibung

Die Erfindung betrifft ein Verfahren zur Herstellung eines vorzugsweise nanostrukturierten Permanentmagneten.

Die Nachfrage an leistungsfähigen Permanentmagneten, die beispielsweise in elektrischen Maschinen eingesetzt werden, steigt beständig. Insbesondere werden Permanentmagnete in Elektromotoren für die Traktion von Kraftfahrzeugen eingesetzt, die im Zuge zunehmender Elektromobilität an Interesse gewinnen. Als magnetische beziehungsweise magnetisierbare Legierungen mit hohen Koerzitivkräften kommen hauptsächlich Seltenerdlegierungen des Typs SE-TM-B oder SE-TM zum Einsatz, wobei SE ein Element der Seltenen Erden ist, TM ein Übergangsmetall der Eisengruppe (Fe, Co, Ni) und B Bor ist. Bei der Fertigung der Magnete aus diesen Materialien werden grundsätzlich möglichst kleine Korngrößen im fertigen Magneten angestrebt, nämlich in der Dimension magnetischer Domänen (< 1 µm), so dass der kompakte Magnet sich im Idealfall aus Eindomänenkristalliten zusammensetzt, wodurch besonders hohe Magnetfeldstärken erzielt werden.

Typische Herstellungsverfahren umfassen die Prozessstufen Pulverisierung des magnetischen Ausgangsmaterials, Pressen des Pulvers zu einem Grünteil mit oder ohne externem Magnetfeld unter Ausformung einer gewünschten Gestalt, Sintern des Grünteils zur weiteren Verdichtung (Hochtemperaturbehandlung), optional Tempern (Wärme- oder Niedertemperaturbehandlung) zum Spannungsabbau und zur Gefügestabilisierung im Magnetkörper, maschinelle Nachbearbeitung (Schneiden, Schleifen) und Magnetisierung in einem Magnetfeld. Teilweise werden verschiedene Prozessstufen auch miteinander kombiniert sowie die Reihenfolge variiert. Beispielsweise ist das Heißpressverfahren bekannt, bei welchem das Pressen unter einer Temperatur erfolgt, die zu einer mechanischen Verdichtung des Magnetmaterials führt und somit einen separaten Sinterprozess erübrigt. Zudem wird das Pressen häufig in einem externen Magnetfeld vorgenommen, wobei magnetisch anisotrope Magnete entstehen, so dass die nachträgliche Magnetisierung entfallen kann. Bei Heißpressen wird kein Magnetfeld während des Pressens eingesetzt. Vielmehr werden die Teile nach dem Pressen magnetisiert.

Bei den im Stand der Technik zum Einsatz kommenden Sinterprozessen wird das pulverisierte Magnetmaterial hohen Temperaturen, knapp unterhalb der Schmelztemperatur des Magnetmaterials ausgesetzt. Bei den genannten Seltenerdlegierungen wird typischerweise eine Sintertemperatur zwischen 1.000 und 1.150 °C bei einer Sinterzeit von 1-3 h angewandt (im Falle gleichzeitiger Druckanwendung entsprechend niedrigere Temperaturen). Dabei kommt es zu einer Verdichtung und zu einer mechanischen Verbindung der Partikel. Ferner findet ein partielles Aufschmelzen der Partikeloberflächen statt, so dass diese sich an ihren Korngrenzen auch stoffschlüssig miteinander verbinden (Sintern in der flüssigen Phase). Unerwünschte Begleiterscheinung des Sinterns ist Kristallwachstum, was selbst bei Verwendung von sehr feinteiligen Pulvern mit Partikeldurchmessern im angestrebten Bereich < 1 µm zu Korngrößen in der Größenordnung von 3 bis 10 µm führt. Diese Korngrößen beeinträchtigen jedoch die magnetische Leistung des Magneten.

Ein weiteres Problem der genannten Magnetmaterialien ist, dass die Legierungen insbesondere in Pulverform sehr pyrophor sind, d. h. sich in Gegenwart von Sauerstoff und Feuchtigkeit leicht entzünden. Dies erfordert besondere Schutzmaßnahmen während der Herstellung, beispielsweise die Verarbeitung unter inerten Schutzgasen sowie eine nachträgliche Beschichtung oder Einbettung des Magneten. Problematisch ist ferner die Korrosionsneigung der Magnetlegierungen, die ebenfalls zu einem Nachlassen der magnetischen Leistung führt.

Um die Temperaturfestigkeit des Magneten zu erhöhen, ist im Stand der Technik ein weiterer Verfahrensschritt als "Grain Boundary Diffusion Process" (GBDP) bekannt. Hierbei wird durch Diffusion ein weiterer Stoff in den Magneten eingebracht, z. B. Dysprosium, Terbium oder Kupfer. Dieser Stoff reichert sich zwischen den Kristallgrenzen an und erhöht die Strukturfestigkeit des Kristallgitters der Körner und somit die Temperaturfestigkeit. Nachteilig am GBDP ist, dass der Verfahrensschritt aufwändig und zeitintensiv ist. Weiterhin ist der Diffusionsprozess auf eine Materialdicke im Bereich unterhalb von 5 mm begrenzt und es entsteht ein problematischer Konzentrationsgradient des eingesetzten Stoffs. Eine Anwendung auf wesentlich dickere Magnete kann daher eine inhomogene magnetische Feldstärke des Magneten zur Folge haben. Weiterhin müssen die so hergestellten Magnete vor Korrosion geschützt werden. Hierfür können Beschichtungen aus Nickel, Epoxidharz u. a. verwendet werden.

EP 1 744 328 B1 beschreibt ein Herstellungsverfahren für einen Magneten, wobei ein Pulver eines Magnetmaterials des Typs SE-Fe-B hergestellt wird und dieses zunächst mit einem Seltenerdoxidpulver und dann mit einem Glaspulver aus einer Polyvinylalkohol-Lösung imprägniert wird, so dass beschichtete Magnetpartikel erhalten werden. Diese Partikel werden nach ihrer Trocknung zunächst bei einem erhöhten Druck (49 MPa) im Magnetfeld zu Grünteilen geformt und diese in einem Heißpressverfahren (294 MPa, 730 °C) zu Magneten heißverdichtet oder heißgeschmiedet. Es resultiert eine Struktur, in der die Magnetpartikel in einer Matrix eingebettet sind, die eine Glasphase und darin verteilte Partikel des Seltenerdoxids aufweist. An den Grenzflächen zwischen den Magnetpartikeln und der Glasphase bildet sich eine Schicht aus, die aus einer Legierungsphase des Magnetmaterials und des Seltenerdelements und darin verteilten Partikeln des Seltenerdoxids besteht. Es wird ferner eine Variante des oben beschriebenen Verfahrens offenbart, bei der das Pulver des Magnetmaterials erst mit einem Seltenerdoxid in einem Sputter-Prozess beschichtet wird. Anschließend erfolgt wiederum die zuvor beschriebene Nass-Imprägnierung mit dem Seltenerdoxidpulver und dem Glaspulver und die nachfolgende Trocknung, Formung und Heißverpressung. In diesem Fall entsteht eine Struktur, die sich von der vorherigen durch eine weitere Schicht unterscheidet, die zwischen der Legierungsschicht und den Magnetpartikeln angeordnet ist und aus dem Seltenerdoxid besteht.

JP 01272101 A offenbart die Behandlung der Oberfläche eines Pulvers eines Magnetmaterials des Typs SE-TM-B mit einem Alkalisilikat, z. B. so genanntem Wasserglas (Na₂O/SiO₂), Kaliumsilikat oder Lithiumsilikat.

Gemäß JP 03295204 A wird eine Seltenerdlegierung pulverisiert und das Pulver mit einer wässrigen Wasserglas-Lösung (Na₂O/SiO₂) vermischt. Die somit mit Wasserglas beschichteten Pulverpartikel werden getrocknet, ausgeformt und zu kompakten Magneten heißverpresst.

Aus EP 0 255 816 A2 ist ein Herstellungsverfahren für Magnete auf Basis einer SE-Fe-B-Legierung bekannt, bei dem das Ausgangsmaterial zunächst zerkleinert und zu einem Pulver verarbeitet wird. Das Pulver wird dann einer Wärmebehandlung bei 300 bis 1000 °C unterzogen und anschließend mit einer keramischen oder metallischen Korrosionsschutzschicht beschichtet, wobei die metallische Schicht auf elektrolytischem Weg erfolgt. Die so hergestellten beschichteten Partikel werden mit oder ohne einem Magnetfeld zu einem Magneten verpresst, wobei dem zu verpressenden Pulver zur Verbesserung der Festigkeit Zusätze eines Metall-, Keramik- oder Kunststoffpulvers zugegeben werden können.

Nach US 2011/0037548 A1 wird ein Magnetmaterial (z. B. Nd-Fe-B) in einem Nassmahlverfahren unter Erhalt von Partikelgrößen < 3 µm pulverisiert und mit einer organischen Verbindung eines hochschmelzenden Metalls oder einem Präkursor einer hochschmelzenden Keramik zu einer Aufschlämmung verarbeitet, wobei die Magnetpartikel mit der organischen Metallverbindung bzw. dem Keramik-Präkursor beschichtet werden. Als hochschmelzendes Metall wird Ta, Mo, W und Nb genannt und als Keramik BN und AIN. Nach Zusatz eines thermo- oder duroplastischen Polymerbindemittels wird die Aufschlämmung in eine gewünschte Form gegossen und bei Temperaturen zwischen 1100 und 1150 °C gesintert. Dabei bildet die organische Metallverbindung bzw. der Keramik-Präkursor eine die Magnetpartikel umgebende Schicht aus, welche das Kristallwachstum während des Sinterns verhindern soll. Von der vorstehenden Methode unterscheidet sich das in US 2011/0267160 A1 offenbarte Verfahren im Wesentlichen dadurch, dass anstelle eines Bindemittels die organische Metallverbindung bzw. der Keramik-Präkursor in gelöster Form in einem korrosionshemmenden, mineralischen oder synthetischen Öl eingesetzt wird.

EP 0 452 580 B1 (DE 690 33 178 T2) beschreibt ein Verfahren zur Herstellung von Polymergebundenen zylinderförmigen Magneten. Hierzu wird eine Mischung aus zumindest 90 Mass.-% eines Metallpulvers, einem thermoplastischen Polymergranulat und einem Schmiermittelzusatz aus Stearat oder Wachs hergestellt. Die Mischung wird in einen beheizten Extruder geladen und aufgeschmolzen und über eine Düse, die mit einem Magnetfeld beaufschlagt wird, zu zylinderförmigen Körpern extrudiert, die nach Erstarren geschnitten werden.

US 5,464,576 A beschreibt ein Verfahren zur Herstellung eines Permanentmagneten umfassend das Herstellen einer Mischung aus Bruchstücken eines schmelzgesponnenen magnetischen Materials (Nd₁₃Fe₆₈CO₁₈B₆) sowie einer metallischen Alkoxid-Zusammensetzung. Die Metall-Alkoxide werden im Wege eines Sol-Gel-Verfahrens in die entsprechenden Metalloxide SiO₂-Bi₂O₃-Al₂O₃-Li₂O-TiO₂-MgO überführt, die Mischung in einem Werkzeug in talerförmige Grünteile abgeformt und das Grünteil durch Beaufschlagung mit Gleichstrom thermisch behandelt und gesintert.

DE 10 2009 046 426 A1 beschreibt ebenfalls ein Verfahren zur Herstellung eines gebundenen Permanentmagneten mittels eines Sol-Gel-Verfahrens. Hierbei wird zunächst eine Mischung (Sol) eines magnetischen Materials sowie einer Vorläuferverbindung für Siliziumoxid oder einer Vorläuferverbindung zumindest eines weiteren Oxides hergestellt und die Mischung durch Gießen und Aushärten zu einem Grünteil abgeformt.

US 5,435,859 A beschreibt ein Verfahren zur Herstellung eines Permanentmagneten, bei dem zunächst ein Pulver eines magnetischen Materials hergestellt und mit einer Binderzusammensetzung, enthaltend Zinkstearat und PbLi-Glaspulver, vermischt wird. Diese Mischung wird zum Beispiel durch Gießen in eine Form und Pressen abgeformt, anschließend wärmebehandelt und schließlich gesintert.

US 2008/117008 A1 beschreibt ein Verfahren zur Herstellung eines Permanentmagneten, wobei zunächst ein Pulver eines magnetischen Materials (ohne Binder) hergestellt und abgeformt wird. Sodann wird das abgeformte Formteil mit einer Lösung einer Vorläuferverbindung eines oxidischen Bindemittels imprägniert. Das so behandelte Formteil wird einer Wärmebehandlung bei 150°C bis 700°C unterzogen. Es werden Vorläufer für Metalloxide eingesetzt, welche beispielsweise Al-, Ca-, Cu-, Ge-, Mg- oder Si-Oxide umfassen. Als Vorläufer werden bevorzugt Alkoxysilane oder Alkoxysiloxane eingesetzt.

Der vorliegenden Erfindung liegt die Aufgabe zugrunde, ein Verfahren zur Herstellung eines feinstrukturierten Permanentmagneten bereitzustellen, mittels welchem Magnete einfacher und kostengünstiger hergestellt werden können, die temperatur- und korrosionsbeständig sind und eine hohe magnetische Leistung besitzen. Weiterhin besteht die Aufgabe in der Bereitstellung eines verbesserten temperatur- und korrosionsbeständigen Magneten.

Diese Aufgaben werden gelöst durch ein Herstellungsverfahren zur Herstellung eines Permanentmagneten, einen entsprechenden mit dem Verfahren herstellbaren Permanentmagneten sowie eine elektrische Maschine, die einen solchen umfasst, mit den Merkmalen der unabhängigen Ansprüche.

Das erfindungsgemäße Verfahren zur Herstellung eines Permanentmagneten umfasst die Schritte:
(a) Herstellen einer Mischung (Feedstock) umfassend
   - ein Pulver eines magnetischen Materials sowie
   - eine Binderzusammensetzung, die zumindest eine Vorläuferverbindung für Siliziumoxid und zumindest eine Vorläuferverbindung zumindest eines weiteren Oxids umfasst,
(b) Abformen der Mischung zu einem Grünteil durch Pulverspritzgießens (PIM für Powder Injection Molding);
(c) thermisches Behandeln des Grünteils zur Überführung von zumindest Teilen der Binderzusammensetzung in die Oxide, und
(d) Sintern des Grünteils aufeinanderfolgend auf oder zeitgleich mit Schritt (c) unter Ausbildung einer Glas-, Keramik- oder Glaskeramikmatrix aus den Oxiden, welche die Partikel des magnetischen Materials einbettet.

Durch das erfindungsgemäße Verfahren wird ein Magnet erhalten, der Kerne des magnetischen Materials aufweist, die in einer Matrix aus Glas, Keramik oder Glaskeramik eingebettet sind. Diese Matrix wird aus der Binderzusammensetzung ausgebildet, insbesondere aus dem Siliziumoxid und dem zumindest einen weiteren Oxid. Dabei wird in Schritt (c) zunächst die Binderzusammensetzung thermisch zersetzt, wobei zumindest Teile der Binderzusammensetzung in die entsprechenden Oxide (Siliziumoxid sowie das/die weitere/n Oxid/e) überführt werden. Als Resultat des Schritts (c) liegen diese Oxide noch als niedermolekulare Verbindungen in Form eines Pulvers (so genannter "weißer Ruß") vor und stellen einen Vorläufer für die zu erzeugende Matrixstruktur dar. Sodann werden die Oxide in Schritt (d) zu dem (dia- oder paramagnetischen) Matrixmaterial gesintert, d. h. sie bilden dann eine kompakte, durchgehende Struktur aus, die im Fall von Glas typischerweise transparent ist.

Durch die Matrix wird ein unerwünschtes Kristallwachstum durch Zusammenwachsen benachbarter Magnetpartikel, insbesondere während des Sinterns verhindert. Im Ergebnis entspricht der Durchmesser der magnetischen Kerne des fertigen Magneten im Wesentlichen dem Durchmesser der eingesetzten Pulverpartikel, der beispielsweise bei ≤ 3 µm, vorzugsweise bei ≤ 1 µm liegt, insbesondere bei 200 bis 400 nm. Erfindungsgemäß wird somit ein Magnet erhalten, der im Wesentlichen aus Eindomänenteilchen oder Eindomänenkristalliten zusammengesetzt ist und somit eine höhere Koerzitivfeldstärke und verbesserte Temperaturbeständigkeit aufweist. Gleichzeitig führen die geringen Partikelgrößen zu einer dichteren Kristallpackung und somit zu einer höheren mechanischen Festigkeit (Härte).

Darüber hinaus wird durch die Benetzung der magnetischen Partikel mit der Binderzusammensetzung die Korrosionsbeständigkeit des Magnetmaterials erhöht. Im gleichen Zuge führt die Benetzung der Magnetpartikel zu einer Passivierung der Partikeloberflächen. Hierdurch wird die Gefahr einer Selbstentzündung bei Kontakt mit Luft des sehr pyrophoren Magnetmaterials, welche insbesondere bei der Pulverhandhabung gegeben ist, überwunden. Ferner führt die dielektrische Isolationswirkung der para- oder diamagnetischen Matrix in Verbindung mit der geringen Partikelgröße zu einer Reduktion der im gesinterten Magneten entstehenden Wirbelströme. Dies führt wiederum zu einer erhöhten Magnetfeldstärke sowie zu einer Vermeidung unerwünschter Erwärmung des Magneten.

Das Verfahren zeichnet sich darüber hinaus durch eine hohe Flexibilität hinsichtlich der einzusetzenden Materialien, sowohl des magnetischen Materials als auch des Matrixmaterials, aus. Zudem ist das Verfahren schneller und kostengünstiger durchführbar als das einleitend beschriebene GBDP-Verfahren.

Dabei wird im Rahmen der vorliegenden Erfindung unter der Bezeichnung "Vorläuferverbindung für Siliziumoxid" eine Verbindung verstanden, die Siliziumoxid unter den Bedingungen des thermischen Behandelns (Schritt (c)) ausbildet oder aus Siliziumoxid besteht. Eine im Rahmen der vorliegenden Erfindung besonders geeignete Vorläuferverbindung für das Siliziumoxid umfasst Siloxane, insbesondere Polydialkylsiloxan der allgemeinen Formel R-[-O-Si(R)₂-]-R, worin R ein Alkylrest bedeutet, insbesondere ein C1- bis C3-Alkylrest, vorzugsweise Methyl. Im Rahmen der vorliegenden Erfindungen können auch Mischungen unterschiedlicher Siloxane eingesetzt werden, insbesondere auch Polydialkylsiloxane unterschiedlicher Kettenlängen bzw. Molmassen. Dabei kann beispielsweise ein vergleichsweise langkettiges Polydialkylsiloxan als Hauptkomponente verwendet werden und ein kurzkettigeres und somit niedriger viskoses Siloxan, beispielsweise Silikonöl, zur Einstellung der rheologischen Eigenschaften der Binderzusammensetzung. Als im Rahmen der vorliegenden Erfindung weitere geeignete Vorläuferverbindungen für Siliziumoxid sind Silikate zu nennen, insbesondere organische Silikate wie Tetraalkylorthosilikate Si(OR¹)₄, worin R¹ ein Alkylrest bedeutet, insbesondere ein C1- bis C3-Alkylrest, vorzugsweise Ethyl. Sowohl Siloxane als auch die genannten Silikate werden bei erhöhten Temperaturen in Silziumoxid unter Abspaltung von Kohlendioxid überführt. Mit Vorteil werden Mischungen zumindest eines Siloxans und zumindest eines Silikats als Vorläuferverbindungen für Siliziumoxid eingesetzt.

Die Binderzusammensetzung umfasst ferner zumindest eine Vorläuferverbindung eines weiteren, von Siliziumoxid unterschiedlichen Oxids. Dabei wird vorliegend unter dem Begriff "Vorläuferverbindung eines Oxids" eine Verbindung verstanden, die ein solches Oxid unter den Bedingungen der thermischen Behandlung in Schritt (c) ausbildet oder aus einem solchen Oxid besteht. Das zumindest eine weitere Oxid weist die Zusammensetzung MₓO_{y} auf, worin O Sauerstoff bedeutet und M ein kationisches Element. Vorzugsweise ist M ausgewählt aus der Gruppe Al, B, P, Ge, Li, Na, K, Sr, Mg, Ca, Ba, Ti, Zr, Cu, Pb, Zn, Be, Dy, Pr, Nd und Tb. Die Indizes x und y sind ganze Zahlen ≥ 1 und ergeben sich aus der Oxidationsstufe von M. Die Oxide weisen in den entsprechenden Gläsern, Keramiken bzw. Glaskeramiken die Funktion eines Flussmittels auf. Vorzugsweise wird als Vorläuferverbindung des weiteren Oxids eine organische Verbindung des Elements M verwendet, insbesondere eine Alkoxidverbindung M(OR²)_{z} oder eine Alkylverbindung M(R²)_{z}, worin R² ein Alkylrest bedeutet, insbesondere ein C1- bis C5-Alkylrest, und z eine ganze Zahl ≥ 1 bedeutet und sich entsprechend der Oxidationsstufe von M ergibt.

Die mengenmäßige und chemische Zusammensetzung der Binderzusammensetzung bestimmt die Zusammensetzung der später im Verfahren ausgebildeten Glas-, Keramikbeziehungsweise Glaskeramikmatrix. Hierin ist ein besonderer Vorteil des Verfahrens zu sehen. Durch die *in situ*-Bildung der die Magnetpartikel umgebenden Matrix kann diese äußerst flexibel gewählt werden.

Neben den vorstehend genannten Komponenten kann die Binderzusammensetzung weitere Additive umfassen. Geeignete Additive umfassen etwa Benetzungsmittel, welche die Benetzung der Magnetpartikel mit der Binderzusammensetzung erleichtern, und Komponenten, welche die rheologischen Eigenschaften und Verarbeitbarkeit der Binderzusammensetzung bzw. der Mischung aus Binderzusammensetzung und Magnetpartikeln verbessern. Vorzugsweise handelt es sich bei den Additiven um organische Verbindungen, welche sich in den nachfolgenden Prozessschritten rückstandsfrei zersetzen, so dass sie im Produkt im Wesentlichen nicht mehr vorhanden sind.

Das magnetische Material ist insbesondere ein ferromagnetisches Metall, vorzugsweise eine ferromagnetische Metalllegierung. Im Rahmen der vorliegenden Erfindung wird ferner unter einem "magnetischen Material", einem "Magnetmaterial", einem "permanentmagnetischen oder dauermagnetischen Material" ein ferromagnetischer oder ferrimagnetischer Werkstoff verstanden, der nach seiner Magnetisierung dauerhaft ein Magnetfeld erzeugt und andere ferro-oder ferrimagnetische Körper anzieht oder abstößt (je nach Ausrichtung der magnetischen Pole). Ein solcher Werkstoff wird in dem Verfahren als Pulvermaterial eingesetzt und bildet nach der Prozesskette im fertigen Magnet die Magnetkerne aus. Vorzugsweise werden vorliegend Legierungen des Typs SE-TM-B oder SE-TM eingesetzt, wobei SE ein Element der Seltenen Erden ist, TM ein Übergangsmetall der Eisengruppe (Eisen Fe, Cobalt Co, Nickel Ni), und B Bor bedeutet. Ein typischer Vertreter des ersten Typs sind Nd-Fe-B-Legierungen, während ein Beispiel des zweiten Typs Legierungen aus Sm und Co darstellen. Derartige Legierungen zeichnen sich durch besonders hohe Koerzitivfeldstärken aus.

Das in Schritt (a) eingesetzte Pulver des Magnetmaterials weist bevorzugt einen Partikeldurchmesser von höchstens 3 µm auf, bevorzugt höchstens 1 µm. Vorzugsweise liegt der Partikeldurchmesser im Bereich von 0,1 bis 0,6 µm (100 bis 600 nm) und besonders bevorzugt im Bereich von 0,2 bis 0,4 µm (200 bis 400 nm). Partikelgrößen in diesem Bereich entsprechen im Wesentlichen der Größe magnetischer Domänen, so dass die genannten Durchmesser mit einer besonders hohen Magnetfeldstärke einhergehen. Die eingesetzten Durchmesser der Partikel bleiben im Wesentlichen im erfindungsgemäßen Verfahren erhalten und liegen demgemäß auch im fertigen Magnet in Form so genannter Eindomänenteilchen vor.

Erfindungsgemäß erfolgt das Abformen in Schritt (b) durch das Verfahren des Pulverspritzgießens (PIM für Powder Injection Molding). Vorzugsweise erfolgt das Herstellen der Mischung (vorliegend auch als Feedstock bezeichnet) aus dem Magnetpulver und der Binderzusammensetzung, unmittelbar in einem Extruder (insbesondere Doppelschneckenextruder) der Spritzgießmaschine. Dabei wird eine homogene Mischung beispielswiese in einer Schnecke der Spritzgießmaschine, die über eine geeignete Temperiereinrichtung verfügen kann, erzeugt. Über eine Düse der Spritzgießmaschine wird der Feedstock in ein Formwerkzeug eingespritzt, in welchem es erstarrt und somit geformt wird. Nach dem Erstarren wird das als Grünteil (oder auch Grünling) bezeichnete Bauteil aus dem Werkzeug entformt. Das Spritzgießen eignet sich besonders für komplexe Bauteilgeometrien, die beispielsweise Hinterschneidungen aufweisen, die auf diese Weise sehr einfach herzustellen sind.

Vorzugsweise erfolgt das Abformen der Mischung zu einem Grünteil unter Beaufschlagung mit einem äußeren Magnetfeld. Auf diese Weise wird eine kristallografische Ausrichtung der magnetischen Domänen des magnetischen Materialpulvers im Grünteil festgelegt, indem die Kristalle sich in dem noch nicht verfestigten Gemisch entsprechend der Magnetfeldrichtung ausrichten und in dieser Ausrichtung "eingefroren" werden (Vormagnetisierung). Im Ergebnis wird eine erhöhte Koerzitivfeldstärke des Magneten erzielt. Im Falle des Verfestigens durch Spritzgießen kann das äußere Magnetfeld etwa im Bereich der Düse der Spritzgießmaschine erzeugt werden, beispielsweise mittels einer elektromagnetischen Spule (siehe zum Beispiel DE 690 33 178 T2). Zudem kann das Formwerkzeug der Spritzgießmaschine mit einem Magnetfeld beaufschlagt werden. Im Falle des Verfestigens durch Pressen wird vorzugsweise das Presswerkzeug mit dem Magnetfeld beaufschlagt.

Alternativ oder zusätzlich zu der Vormagnetisierung des Bauteils während seines Abformens und seiner Verfestigung zu einem Grünteil, umfasst das Verfahren einen zusätzlichen Magnetisierungsschritt, der im Anschluss an das Sintern in Schritt (d) durchgeführt wird und der das Magnetisieren des magnetischen Materials in einem äußeren Magnetfeld umfasst. Hierbei werden die magnetischen Dipole der Domänen entsprechend der Ausrichtung des Magnetfelds ausgerichtet.

Die thermische Behandlung zur Zersetzung der Binderzusammensetzung und Freisetzung der verschiedenen Oxide wird vorzugsweise bei einer Temperatur im Bereich von 200 bis 300 °C durchgeführt. Die Energie wird insbesondere durch thermische Beheizung zugeführt oder durch Beaufschlagung mit einem magnetischen Wechselfeld, welches zur induktiven Erwärmung des magnetischen Materials führt. Die Behandlung wird vorzugsweise in einer neutralen Atmosphäre durchgeführt, beispielsweise in einer Argon-, Stickstoff- oder Heliumatmosphäre.

Der Sinterschritt (d) des Verfahrens dient der Überführung der pulverförmigen Oxide, die aus der Binderzusammensetzung freigesetzt wurden, in die Matrix aus Glas, Keramik oder Glaskeramik.

In bevorzugter Ausführung der Erfindung erfolgt das Wärmebehandeln zur Sinterung des Grünteils bei einer Temperatur, die kleiner ist als eine zur Sinterung des magnetischen Materials geeignete Temperatur. Mit anderen Worten, wird der Sinterschritt (d) des Verfahrens unter Bedingungen durchgeführt, bei denen keine Sinterung des Magnetmaterials erfolgt, jedoch eine Sinterung der Binderzusammensetzung bzw. ihrer Folgeprodukte zur Ausbildung des Glases, der Keramik oder der Glaskeramik. Insbesondere wird in Schritt (d) die Sinterung bei einer Temperatur durchgeführt, die höchstens einer Transformations- oder Schmelztemperatur (je nachdem, ob dieses ein amorphes oder kristallines Material ist) des Matrixmaterials entspricht. Demgemäß erfolgt die Sinterung in Schritt (d) ausschließlich unter Aufschmelzung des Matrixmaterials und nicht unter Sinterung des Magnetmaterials der Magnetkerne. Vorzugsweise wird das gesamte Verfahren unter Bedingungen durchgeführt, bei denen keine Sinterung der Magnetpartikel erfolgt. Dies bedeutet, dass in keinem Verfahrensschritt Bedingungen (insbesondere Temperatur und Druck) angewendet werden, welche zur Sinterung des Magnetmaterials führen. Dabei ist grundsätzlich zu berücksichtigen, dass die Transformations- und Schmelztemperaturen der Materialien druckabhängig sind und somit die Sintertemperatur unter Berücksichtigung des Drucks zu wählen ist. Wird somit in einem Verfahrensschritt gleichzeitig ein erhöhter Druck und eine erhöhte Temperatur angewandt, so ist die Prozesstemperatur anders als beim druckfreien Sintern zu wählen. Durch die Prozessführung unter Vermeidung der Sinterung des Magnetmaterials, insbesondere im Sinterschritt (d), wird ein unerwünschtes Kristallwachstum der Magnetpartikel verhindert. Im Ergebnis entspricht daher der Durchmesser der magnetischen Kerne des fertigen Magneten im Wesentlichen dem Durchmesser der eingesetzten Pulverpartikel.

Es versteht sich, dass die konkrete, in Schritt (d) gewählte Temperatur von der Binderzusammensetzung bzw. dem daraus resultierenden Matrixmaterial abhängt, insbesondere seiner Glasübergangs- (Transformations-) bzw. Schmelztemperatur. Beispielsweise liegt die Transformationstemperatur vieler Gläser, die im Rahmen der vorliegenden Erfindung Beispiele bevorzugter Matrixmaterialien darstellen (s. u.), im Bereich bis 900 °C. In diesem Fall beträgt ein bevorzugter Temperaturbereich für die Sinterung 400 bis 800 °C, insbesondere 550 bis 650 °C, wenn unter Normaldruck gearbeitet wird. Insbesondere liegt die Sintertemperatur mindestens 50 °C, vorzugsweise mindestens 100 °C unterhalb der Transformations- bzw. Schmelztemperatur des Beschichtungsmaterials. Wird die Sinterung unter Druck ausgeführt, beispielsweise gleichzeitig mit dem Schritt (c) des Pressens, werden entsprechend niedrigere Temperaturen angewendet.

Der mit dem Verfahren herstellbare Permanentmagnet umfasst Kerne des magnetischen Materials und eine Matrix aus einem Glas, einer Keramik oder einer Glaskeramik, in der die Kerne eingebettet sind.

Dabei gehen die Kerne aus dem eingesetzten Pulver des Magnetmaterials hervor und entsprechen chemisch und in ihrer Größe somit diesem. Entsprechend dem eingesetzten Pulver weisen die Kerne vorzugsweise einen mittleren Partikeldurchmesser von höchstens 3 µm auf, insbesondere von höchstens 1 µm und besonders bevorzugt im Bereich von 0,2-0,4 µm.

Das Matrixmaterial hingegen resultiert aus der gesinterten Binderzusammensetzung und ist ein Glas, eine Keramik, eine Glaskeramik oder eine Kombination von diesen. Das Matrixmaterial, welches die magnetischen Kerne umhüllt und einbettet, ist ein para- oder diamagnetischer Werkstoff, ist umgangssprachlich also nicht magnetisch. Gläser, Glaskeramiken und Keramiken zeichnen sich neben ihrem Para- oder Diamagnetismus durch einen besonders hohen Korrosionsschutz sowie Schutz vor Entzündung aus.

Unter Gläsern werden amorphe Substanzen verstanden, die strukturell als ein unregelmäßiges Gefüge (Netzwerk) vorliegen (im Gegensatz zu kristallinen Substanzen, die in einer geordneten Gitterstruktur vorliegen). Chemisch basieren Gläser auf SiO₂ und anderen Metalloxiden, insbesondere Al₂O₃, Na₂O, K₂O, MgO, CaO, B₂O₃, TiO₂, PbO, P₂O₅ und andere. Vorliegend bevorzugte Gläser umfassen Quarz, Kronglas, Kalk-Natron-Glas, Floatglas, Borosilikatglas. In den meisten Glaszusammensetzungen liegen Mischungen verschiedener Oxide mit variablen SiO₂-Anteilen vor. Die verschiedenen Oxide liegen im Glas nicht in Form separater niedermolekularer Moleküle vor, sondern als ausgedehnte Netzwerke. So liegt das Siliziumoxid als Silikat in Form miteinander verketteter SiO₄-Tetraeder vor. Glaskeramiken weisen grundsätzlich gleiche oder ähnliche chemische Zusammensetzungen wie Gläser auf. Sie unterscheiden sich von Gläsern darin, dass neben glasigen Phasen auch polykristalline Phasen vorhanden sind. Keramische Materialien umfassen mineralische Silikatmaterialien, d. h. ebenso wie die Gläser oder Glaskeramiken SiO₂- beziehungsweise SiO₄-basierte Materialien wie Kaoline oder Tonmineralien, oxidische Keramiken, die auf Aluminiumoxid, Berylliumoxid oder anderen beruhen, nicht oxidische Materialien sowie Carbide und Nitride, wie Siliziumcarbid SiC, Borcarbid BC oder Bornitrid BN. Hinsichtlich der chemischen Zusammensetzung existieren Überschneidungen der keramischen Materialien zu den Gläsern oder Glaskeramiken.

Das Matrixmaterial wird vorzugsweise so gewählt, dass es eine niedrigere Transformationstemperatur T_{g} bzw. Schmelztemperatur Tₘ aufweist als das Magnetmaterial, damit es bei seiner Sinterung nicht zu einem Sintern des letzteren kommt. Vorzugsweise liegt die Transformationstemperatur T_{g} bzw. Schmelztemperatur Tₘ zumindest 100 K, insbesondere zumindest 200 K unterhalb der Schmelztemperatur des Magnetmaterials. Die Transformationstemperatur T_{g} oder Schmelztemperatur Tₘ kann beispielsweise mittels kalorimetrischer Verfahren (Differentialscanningkalorimetrie DCS) bestimmt werden.

Die Permanentmagnete können überall dort Anwendung finden, wo auch herkömmliche Magnete eingesetzt werden. Dies betrifft insbesondere elektrische Maschinen, beispielsweise Elektromotoren, speziell solche zum alleinigen oder kombinierten Antrieb von Fahrzeugen (BEV bzw. HEV) oder für Steuerlenkungsantriebe. Darüber hinaus können die Magnete mit Vorteil auch in medizinischen Bereichen eingesetzt werden, beispielsweise in Magnetresonanztomographen oder dergleichen.

Der mit dem erfindungsgemäßen Verfahren hergestellte Permanentmagnet, insbesondere eine Mehrzahl von solchen, wird bevorzugt in einer elektrischen Maschine eingesetzt. In besonderer Ausführung ist die elektrische Maschine als Elektromotor ausgebildet, bei dem die Permanentmagnete typischerweise Teil des Rotors sind, beispielsweise in ein Blechpaket des Rotors eingebettet sind oder auf dessen Oberfläche befestigt sind.

Die Erfindung wird nachfolgend in Ausführungsbeispielen anhand von Figuren näher erläutert. Es zeigen:
- Figur 1: ein Fließschema eines Verfahrens des Standes der Technik zur Herstellung eines Permanentmagneten;
- Figur 2: ein Fließschema des erfindungsgemäßen Verfahrens zur Herstellung eines Permanentmagneten nach einer vorteilhaften Ausgestaltung;
- Figur 3: struktureller Aufbau verschiedener Zwischenprodukte einzelner Verfahrensschritte sowie des Endprodukts des erfindungsgemäßen Verfahrens;
- Figur 4: Prozessschritt des Abformens zu einem Grünteil mittels Pulverspritzgießen;
- Figur 5: Presswerkzeug mit Heizeinrichtung zum mechanischen Abformen zu einem Grünteil in einem Magnetfeld;
- Figur 6: Prozessschritt des thermischen Behandelns des Grünteils in einem Ofen, und
- Figur 7: Prozessschritt des Sinterns des Magneten im Ofen.

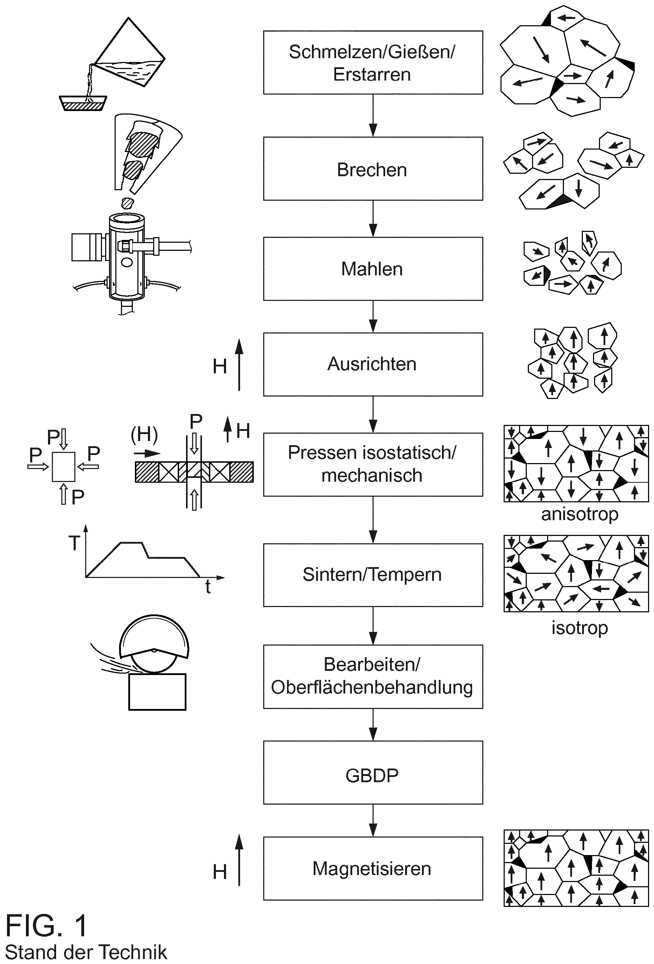

Ein im Stand der Technik bekanntes beispielhaftes Verfahren zur Herstellung von Permanentmagneten zeigt Figur 1 (mittlere Spalte). Auf der linken Seite sind die einzelnen Prozessschritte figürlich dargestellt, während auf der linken Seite die strukturellen Ergebnisse der einzelnen Prozessschritte stark schematisiert dargestellt sind.

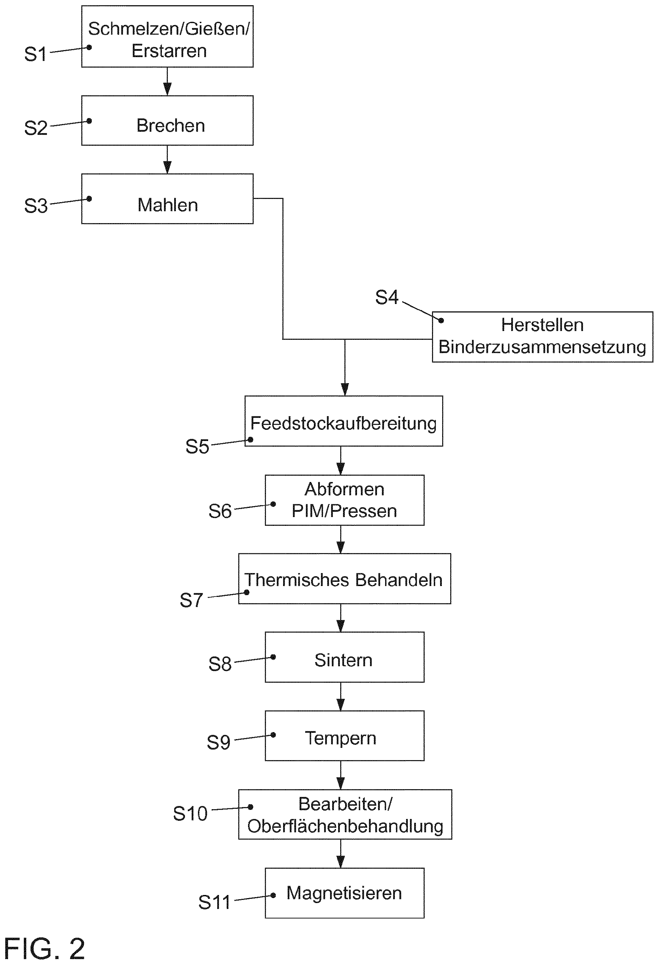

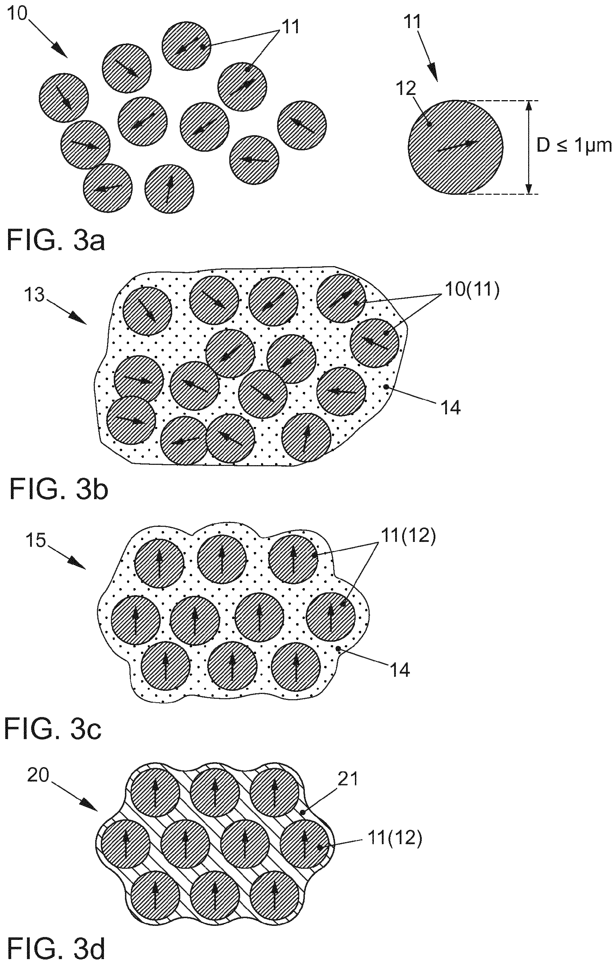

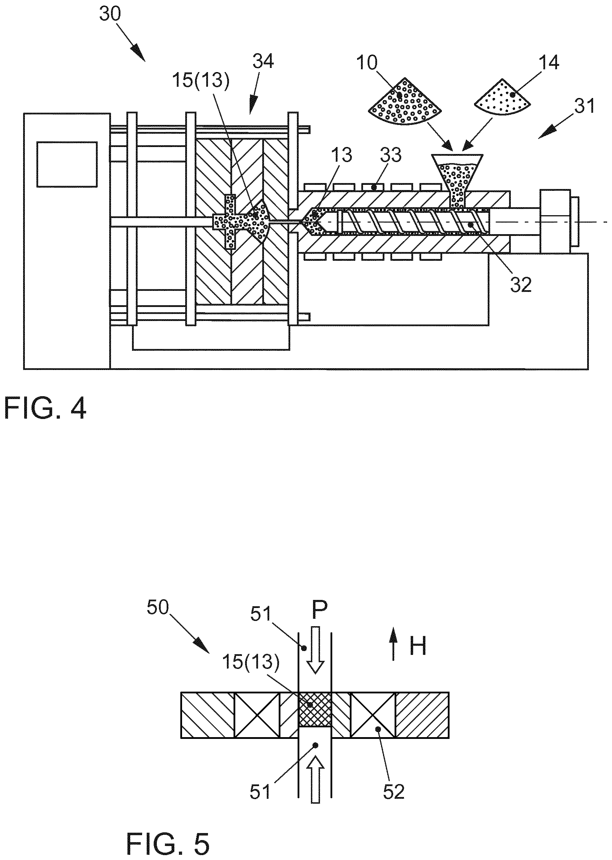

Zunächst wird ein ferromagnetisches Material (nachfolgend Magnetmaterial) beispielsweise in einem Vakuuminduktionsofen geschmolzen, gegossen und durch Abkühlung erstarrt. Dabei werden kristalline Strukturen isotroper Legierungen erhalten. Nach dem Aushärten werden die beispielsweise barrenförmigen Gebilde mechanisch gebrochen und anschließend beispielsweise in einer Jet-Mühle unter Stickstoffatmosphäre gemahlen. Das so entstandene Pulver besteht aus einzelnen Partikeln, deren Durchmesser in der Größenordnung von 3-5 µm liegen. Optional kann das Pulver in einem externen Magnetfeld ausgerichtet werden, so dass dieses magnetisch anisotrop vorliegt. Das Pulver wird anschließend im Werkzeug mit einer mechanischen Presse zu einem Pressling (auch Grünteil oder Grünling genannt) gepresst, wobei je nach Pressdruck eine mehr oder weniger kompakte Struktur entsteht. Das Pressen kann isostatisch durchgeführt werden, wobei der Pressdruck gleichmäßig aus allen Raumrichtungen auf das Grünteil ausgeübt wird, oder anisostatisch, wobei der Pressdruck in der Regel mechanisch aus einer oder aus zwei entgegengesetzten Raumrichtung/en einwirkt. Im Falle einer zuvor erfolgten Magnetisierung wird das Pressen isostatisch durchgeführt. Ferner kann das Pressen ohne ein externes Magnetfeld erfolgen, so dass ein isotroper Pressling entsteht, in welchem keine magnetische Kristallorientierung vorhanden ist. Weitaus häufiger erfolgt das Pressen jedoch in einem externen Axial- oder Quer-Magnetfeld, woraus anisotrope Presslinge hervorgehen, in welchen eine gerichtete Kristallorientierung entlang der Magnetisierungsachse vorhanden ist. Im folgenden Schritt wird der Pressling gesintert. Unter Sintern versteht der Fachmann ein Verfahren, bei dem feinkörnige, keramische oder metallische Stoffe auf Temperaturen kleiner/gleich deren Schmelztemperaturen unter unterschiedlichen Atmosphären erhitzt werden. Durch den Vorgang des Sinterns gehen die Partikel des Pulvers mechanische Bindungen ein, teilweise auch stoffschlüssige Verbindungen. Beispielsweise werden bei Legierungen des Typs Nd-Fe-Bor, z. B. Nd₂Fe₁₄B Temperaturen im Bereich von 1000 bis 1150 °C zum Sintern angewandt. Durch das Zusammenwachsen einzelner Kristallite des Gefüges entstehen Körner mit einem Durchmesser in der Größenordnung von 3 bis 10 µm. Nach dem Sintern liegt ein isotroper Körper vor, da die Curietemperatur überschritten wurde. Optional kann ein Temperprozess anschließen, bei dem der Magnet einer weiteren thermischen Behandlung, allerdings unter einer niedrigeren Temperatur als der Sintertemperatur ausgesetzt wird (Niedertemperaturbehandlung). Ziel des Temperns ist z. B. der Abbau von Restspannungen im Kristallgefüge. Anschließend kann eine formgebende Bearbeitung und/oder Oberflächenbehandlung erfolgen, um den Magneten eine gewünschte Form und Abmessung zu verleihen. Es kommen insbesondere spanende Techniken zum Einsatz, wie Schleifen, Schneiden, Fräsen oder andere. Ferner kann nach der Bearbeitung ein als "Grain Boundary Diffusion Process" (GBDP) bezeichneter Prozess durchgeführt werden, um die Koerzitivfeldstärke und die Temperaturfestigkeit des Magneten zu erhöhen. Zu diesem Zweck wird in den Magneten ein weiterer Stoff eingebracht, beispielsweise Dysprosium Dy, Terbium Tb oder Kupfer Cu. Die Nachteile dieses Schritts wurden einleitend bereits genannt. Ferner ist die Aufbringung von Oberflächenbeschichtungen üblich, beispielsweise eines Epoxidharzes oder einer metallischen Schicht aus Kupfer, Nickel, Aluminium oder anderen. Durch erneutes Einbringen in ein externes Magnetfeld werden die magnetischen Domänen aufmagnetisiert. Das erfindungsgemäße Verfahren wird in einer bevorzugten Ausführungsform anhand der nachfolgenden Figuren 2 bis 7 beispielhaft erläutert wird. Dabei zeigen Figur 2 ein Fließdiagramm des Verfahrens, Figur 3 stark schematisiert den strukturellen Aufbau der Zwischenprodukte verschiedener Prozessschritte des Verfahrens und die Figuren 4 bis 7 Einzelheiten zu den einzelnen Prozessschritten.

Die ersten Schritte S1 bis S3 nach Figur 2, mit denen ein Pulver eines magnetischen Materials, z. B. einer Legierung der Zusammensetzung Nd₂Fe₁₄B, bereitgestellt wird, können im Wesentlichen den bereits im Zusammenhand mit Figur 1 erläuterten Schritten entsprechen. Das Mahlen in Schritt S3 erfolgt insbesondere mit konventionellen Mahltechniken, wie Nassmahlen, Jet Milling, Melt Spinning oder Wasserstoffversprödung HDDR.

Im Rahmen des erfindungsgemäßen Verfahrens wird ein Pulver bereitgestellt, das nach Schritt S3 eine mittlere Partikelgröße von ≤ 3 µm, insbesondere ≤ 1 µm, idealerweise 200 bis 400 nm aufweist und somit in Form von Eindomänenteilchen vorliegt.

Das in Schritt S3 aus Figur 2 erzeugte Pulver 10 besteht gemäß Figur 3a aus Partikeln 11 des Magnetmaterials 12. Die magnetischen Ausrichtungen der Domänen (siehe Pfeile in den Partikeln 11) sind statistisch im Raum verteilt, d. h. das Material ist magnetisch isotrop. Der mittlere Partikeldurchmesser D ist insbesondere kleiner oder gleich 1 µm, idealerweise 0,2 bis 0,4 µm.

In einem parallelen Verfahrensschritt S4 gemäß Figur 2 erfolgt die Herstellung einer Binderzusammensetzung. Eine exemplarische Binderzusammensetzung umfasst die folgenden Komponenten:
1) Polydimethylsiloxan (PDMS) als Präkursor für Siliziumoxid,
2) Silicon-Öl (Viskosität z. B. 50 mPa) zur Einstellung der rheologischen Eigenschaften, insbesondere der Viskosität der Zusammensetzung und als Präkursor für Siliziumoxid,
3) Tetraethylorthosilikat (TEOS) als Präkursor für Siliziumoxid,
4) Alkoxide verschiedener Elemente, beispielsweise B(OR)₃, Na(OR), Al(OR)₃, K(OR), wobei R ein Alkylrest, insbesondere Methyl oder Ethyl ist, als Präkursor für die entsprechenden Oxide dieser Elemente.

Daneben können der Zusammensetzung noch Additive zur Benetzung der Magnetpartikel oder andere zugegeben werden.

Die genannten Komponenten werden eingewogen und in handelsüblichen Knetern, Mixern, Doppelschneckenextrudern oder dergleichen gemischt und geknetet.

Durch die Anteile der Vorläuferverbindungen für Siliziumoxid (Komponenten 1-3) und der verschiedenen Alkoxide (Komponente 4) wird die Zusammensetzung der im späteren Verfahren zu erzeugenden Matrix bestimmt. Beispielsweise werden die entsprechenden Anteile der Komponenten so gewählt, dass Borosilikatglas erzeugt wird, das aus ca. 80 Mass.-% SiO₂, ca. 13 Mass.-% B₂O₃, ca. 4 Mass.-% Na₂O, ca. 2 Mass.-% Al₂O₃ und ca. 0,5 Mass.-% K₂O besteht.

Aufgrund seiner sehr guten thermischen Eigenschaften stellt Borosilikatglas eine bevorzugte Ausgestaltung dar.

Tabelle 1 zeigt Beispiele für zwei Binderzusammensetzungen, die zur Herstellung einer Matrix geeignet sind.

**Tabelle 1:**

| | Rezeptur 1 | Rezeptur 2 |
|---|---|---|
| Polydimethylsiloxan (PDMS) | 108 g | 55 g |
| Silicon-Öl | 1,5 g | 1,5 g |
| Tetraethylorthosilikat (TEOS) | - | 140 g |
| Natriummethoxid** | 7 g | 7 g |
| Trimethylaluminium | 1,4 g | 1,4 g |
| Triisopropylborat** | 75 g | 75 g |
| Summe | 192,9 g | 279,9 g |

| | | |
|---|---|---|
| **Alkoxid | | |

In einem anschließenden Schritt S6 wird das Pulver 10 des magnetischen Materials aus Schritt S3 mit der Binderzusammensetzung aus Schritt S4 zu einem Gemisch (Feedstock) durch Mischen verarbeitet. Neben der dargestellten Variante, bei der zunächst die Binderzusammensetzung zubereitet und anschließend mit dem Magnetpulver vermischt wird, kann die Herstellung des Feedstocks auch erfolgen, indem die Komponenten der Binderzusammensetzung direkt mit dem magnetischen Material vermischt werden.

Das Verhältnis von Magnetpulver zur Binderzusammensetzung hängt vom anschließenden Formgebungsverfahren ab. Sofern das Abformen durch Pulverspritzgießen erfolgt, beträgt der Anteil der Binderzusammensetzung in der Mischung beispielsweise 1 bis 20 Mass.-%, vorzugsweise 6 bis 10 Mass.-%. Erfolgt das Abformen durch Pressen, wird ein geringerer Anteil der Binderzusammensetzung gewählt, insbesondere ein Anteil von ≤ 5 Mass.-%, vorzugsweise ≤ 2 Mass.-%. Die Herstellung der Mischung aus Magnetpartikeln und Binderzusammensetzung erfolgt durch direktes Mischen in handelsüblichen Knetern, Mixern oder Doppelschneckenextrudern, wobei vorzugsweise in einer Schutzgasatmosphäre gearbeitet wird, beispielsweise in Argon oder Stickstoff, um die Selbstentzündung des Magnetpulvers zu unterdrücken.

Figur 3b) zeigt stark schematisiert die in Schritt S5 erhaltene homogene Mischung (Feedstock) 13, umfassend das Pulver 10 der magnetischen Partikel 11 sowie die Binderzusammensetzung 14.

Im anschließenden Schritt S6 (siehe Figur 2) erfolgt das Abformen des Feedstocks 13 zu einem Grünteil durch Pulverspritzgießen PIM.

Figur 4 zeigt schematisch die Erzeugung des Grünteils durch Pulverspritzgießen. Hierzu wird eine Spritzgießmaschine 30 eingesetzt, die einen Spritzzylinder 31, der mit einer Schnecke 32 und einer Temperiereinrichtung 33 ausgestattet ist, sowie ein Formwerkzeug 34 aufweist. Im Falle des Pulverspritzgießens wird der Feedstock über einen Trichter des Spritzzylinders 31 zugeführt. Die drehende Schnecke zieht das Material im temperierten Zylinder an, wobei eine Homogenisierung und Verdichtung der Feedstock-Schmelze erfolgt. Über eine Düse des Extruders 31 wird die so vordosierte Mischung 13 in eine Kavität des Formwerkzeugs 34 eingespritzt. Dort wird die Mischung 13 verdichtet und zu einem Grünteil 15 verfestigt. Nach der Verfestigung wird das Formwerkzeug 34 geöffnet und das so erhaltene Grünteil 15 entformt. Das Grünteil 15 ist in dieser Ausführung magnetisch isotrop.

In einer weiteren bevorzugten Ausführung wird das Formwerkzeug 34 und/oder die Düse des Spritzzylinders 31 mit einem äußeren Magnetfeld beaufschlagt. Hierdurch wird eine Ausrichtung der Kristalle (magnetischen Domänen) der Pulverteilchen des magnetischen Materials entlang des magnetischen Feldes erzielt (primäre Magnetisierung). Das Produkt ist in diesem Fall anisotrop. Vorzugsweise ist das Formwerkzeug 34 mit einer hier nicht dargestellten Ultraschallsonde ausgestattet. Durch die Ultrabeschallung der Mischung 13 erfolgt eine mechanische Anregung des Pulvers, wodurch eine höhere Packungsdichte der Partikelpulver des magnetischen Materials erzielt wird.

Alternativ erfolgt das Abformen (Verdichten) in Schritt S6 durch Pressen der Mischung 13. Dieser Vorgang ist in Figur 5 dargestellt, worin mit 50 ein Presswerkzeug inklusive einer nicht dargestellten Temperiereinrichtung bezeichnet ist, welches das beschichtete Pulver 13 aufnimmt. Das Presswerkzeug 50 weist zwei vertikal bewegbare Pressstempel 51 auf, welche von zwei gegenüberliegenden Seiten die Mischung 13 einschließen und auf diese einwirken und somit mit einem Druck p beaufschlagen (anisostatisches Pressen). Das Presswerkzeug 50 weist ferner eine Spule 52 auf, die ein gerichtetes axiales Magnetfeld H erzeugt, so dass die Mischung 13 während des Verpressens mit dem Magnetfeld H beaufschlagt wird und kristallographisch orientiert wird. Das hier dargestellte mechanische (anisostatische) Pressen im Axialfeld entspricht einer bevorzugten Ausführung des Verfahrens. Möglich ist jedoch ebenso, die Schritte des Pressens und der magnetischen Ausrichtung in separaten Schritten durchzuführen, d. h. zunächst die Mischung auszurichten, isostatisch zu verpressen, dann zu sintern und anschließend in einem externen magnetischen Feld zu magnetisieren.

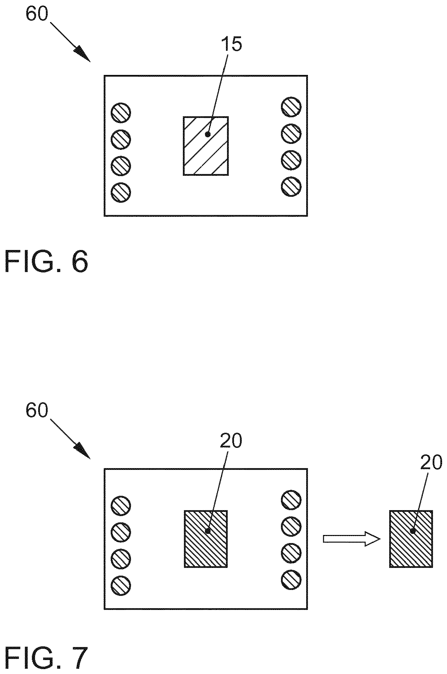

Das Ergebnis des Abformens in Schritt S6 im Magnetfeld ist in Figur 3c dargestellt. Produkt des Verfestigens/Verdichtens ist ein Grünteil 15, das auch als Grünling oder Grünkörper bezeichnet wird. In dem Grünteil 15 liegen die Partikel 11 des magnetischen Materials verdichtet und mehr oder weniger geordnet vor. Ferner weisen sie infolge der Magnetisierung während des Abformens im Spritzgieß- oder Pressverfahren eine gemeinsame Ausrichtung ihrer magnetischen Dipole auf, so dass das Grünteil 15 selbst ein äußeres Magnetfeld erzeugt. Es sei angemerkt, dass während des Pressens Bedingungen herrschen, unter denen keine chemische Veränderung der Binderzusammensetzung 14 oder des Magnetmaterials 12 erfolgt. Im Anschluss an die Herstellung des Grünteils 15 in Schritt S6 erfolgt in Schritt S7 ein thermisches Behandeln des Grünteils 15 zur Zersetzung der Binderzusammensetzung 14 (Entbindern). Dies ist in Figur 6 gezeigt. Hier wird das Grünteil 15 in einen Ofen 60 eingebracht. Dabei erfolgt die Erwärmung des Grünteils 15 auf eine Temperatur, die geeignet ist, die Binderzusammensetzung 14 zu zersetzen, so dass die einzelnen Komponenten Siliziumoxid SiO₂ und die weiteren Oxide beispielsweise B₂O₃, Na₂O Al₂O₃ und K₂O freisetzen. Die hier anzuwendende Temperatur hängt von der konkreten Zusammensetzung der Binderzusammensetzung 14 ab und beträgt beispielsweise 200 bis 350 °C. Der Schritt S6 entspricht der ersten Umwandlung der Binderzusammensetzung unter Freisetzung der Oxide. In einem anschließenden Schritt S8 erfolgt das Sintern des Grünteils 15, was in Figur 7 dargestellt ist. Hier wird in dem Ofen 60 die Temperatur auf eine Sintertemperatur von beispielsweise 450 bis 800 °C erhöht, bei der die aus der Binderzusammensetzung 14 erzeugten Oxide schmelzen und in die Glasphase übergehen (vitrifizieren) und sintern. Die gewählte Sintertemperatur liegt vorzugsweise jedoch unterhalb einer Temperatur, bei der auch das Magnetmaterial sintert. Mit anderen Worten, liegt die Temperatur des in Figur 7 gezeigten Sinterns bei einer Temperatur, die im Transformationsbereich des Matrixmaterials (hier des Glases) liegt. Als Sinteratmosphäre, wie auch als Atmosphäre für die zuvor erfolgte thermische Behandlung, kommen in Frage Vakuum, Vakuum mit einem vorbestimmten Partialdruck von N₂ oder Ar, eine Stickstoff-, Argon- oder Heliumatmosphäre oder eine oxidative Atmosphäre, z. B. Luft oder andere. Die in den Figuren 6 und 7 dargestellten Schritte des thermischen Behandelns und des Sinterns können, wie zuvor dargestellt, aufeinander folgend durchgeführt werden, indem die Temperatur des Ofens 60 zunächst auf die Zersetzungstemperatur der Binderzusammensetzung 14 und sodann auf die Sintertemperatur eingestellt wird. In alternativer Ausführung kann die Temperatur des Ofens 60 auch direkt auf die Sintertemperatur eingestellt werden, so dass die beiden Schritte prozessual zu einem einzigen Verfahrensschritt zusammengefasst werden.

Das Ergebnis des Sinterns zeigt Figur 3d. Der entstandene Permanentmagnet 20 weist nunmehr eine durchgehende Matrix 21 des Matrixmaterials auf, welches im vorliegenden Beispiel aus dem gebildeten Glas besteht und typischer- aber nicht notwendigerweise transparent ist. In dieser Matrix 21 liegen die eingebetteten Partikel 11 des Magnetmaterials 12 in einer mehr oder weniger geordneten Kristallpackung vor. Da während des gesamten Verfahrens ein Sintern der Partikel 11 des Magnetmaterials durch entsprechende Wahl der Prozessparameter Druck und Temperatur verhindert wurde, entsprechen die Partikeldurchmesser der Magnetpartikel 11 weiterhin im Wesentlichen dem ursprünglichen mittleren Partikeldurchmesser D des Pulvers 10, d. h. sie betragen insbesondere höchstens 1 µm, vorzugsweise liegen sie im Bereich von 200 bis 400 nm. Der mittlere Abstand der Partikel 11 innerhalb der Matrix 21 wird durch den Anteil der Binderzusammensetzung 14 in der Mischung 13 aus Binderzusammensetzung 14 und Magnetpulver 10 bestimmt. Der Abstand liegt vorzugsweise im Bereich von 1 bis ≤ 30 nm, insbesondere im Bereich von 1 bis ≤ 20 nm.

Im Anschluss an das Sintern erfolgt optional das Tempern des Magneten (Schritt S9 in Figur 2). Dabei wird im selben oder einem anderen Ofen 60 wie in Figur 6 oder 7 der Magnet 20 einer Niedertemperaturbehandlung ausgesetzt, um mechanische Spannungen im Magneten 20 abzubauen. Dabei wird eine Temperatur eingestellt, die kleiner oder gleich der in Schritt S8 angewandten Sintertemperatur liegt. Durch das Tempern werden Restspannungen im Material reduziert und das Kristallgefüge des Magneten relaxiert. Die Temperatur des Temperns hängt von der Zusammensetzung des Matrixmaterials ab und beträgt beispielsweise 250 bis 550 °C.

Im Anschluss an das Tempern kann optional eine mechanische Bearbeitung des Magneten 20 erfolgen (Schritt S10 in Figur 2), um diesem eine gewünschte Form zu verleihen. Jedoch wird vorzugsweise die gewünschte Form bereits während des Verfestigens in Schritt S6 erzeugt. Ferner kann der Magnet 20 noch beliebigen Oberflächenbehandlungen und/oder Beschichtungsvorgängen unterzogen werden. Aufgrund der Matrix kann grundsätzlich jedoch auf eine Beschichtung zum Korrosionsschutz verzichtet werden.

Sofern die Kristallorientierung und das Abformen in Schritt S6 ohne Magnetisierung erfolgt, wird in einem Schritt S11 das gesinterte Grünteil in einem externen Magnetfeld magnetisiert, um die magnetischen Domänen auszurichten.

Die erfindungsgemäßen Magnete, welche mittels des erfindungsgemäßen Verfahrens hergestellt werden können, weisen folgende Vorteile auf:
- die Darstellung komplexer Formen ist möglich, insbesondere durch Einsatz von PIM;
- vergrößerte Koerzitivfeldstärke und somit Temperaturbeständigkeit aufgrund der geringeren Partikel- bzw. Korngröße;
- Korrosionsbeständigkeit aufgrund der Einbettung der metallischen Partikel in der Matrix;
- größere mechanische Festigkeit (Härte) aufgrund der geringeren Partikelgröße und höheren Packungsdichte;
- Reduktion im Magneten entstehender Wirbelströme aufgrund der dielektrischen Isolationswirkung der Matrix in Verbindung mit der geringen Partikelgröße;
- höherer Wirkungsgrad wegen elektrischer Isolierung der Partikel (geringerer Wirbelstrom = geringere Wärmeentstehung im Magnet = höhere Temperaturbeständigkeit);
- gleichmäßige Verteilung des Magnetflusses, da es kein Kornwachstum auftritt;
- Entfall der Beschichtung des Endmagneten;
- keine oder minimaler Verzug der Magnete beim Sintern (beim Stand der Technik entsteht der Verzug, die Magnete müssen einzeln nachgeschliffen werden);
- engere Toleranzanforderungen sind erzielbar;
- frei von Dy und Tb (falls gewünscht);
- keine komplexe Gefügebildung;
- keine Bildung von Nd-reicher Phase (flüssige Phase durch Materialmatrix), d. h. die magnetische Entkoppelung der Magnetteilchen findet durch Beschichtungsmaterial statt = Gehaltreduzierung von Nd bis ca. 8 % (Kostenreduzierung);
- keine Bildung von unerwünschter η-Phase;
- keine Bildung von α Fe dendritischer Phase;
- kein Kornwachstum;
- keine Begrenzung in Bezug auf Magnetabmessungen (bei GBDP sind die Magnete auf < 5 mm beschränkt);
- Eliminierung der Entzündungsgefahr des Magnetpulvers;
- Produktionsprozesse (nach der Pulverbeschichtung) durchführbar unter normaler Atmosphäre, problemlose Lagerung des Pulvers;
- keine Restporosität im Magneten nach dem Sintern;
- keine Beeinflussung der Magnetlegierung durch Sintervorgänge;
- Umweltfreundlichkeit: Magnete 100 % recyclebar. Trennung der Magnetkerne durch Aufwärmung der Materialmatrix (flüssige Phase). SCIP bleibt vorhanden, keine Agglomeratbildung der Magnetkerne (Magnetteilchen).

### Bezugszeichenliste

- 10: Pulver
- 11: Partikel
- 12: Magnetmaterial
- 13: Mischung
- 14: Binderzusammensetzung
- 15: Grünteil

- 20: Permanentmagnet
- 21: Matrix

- 30: Spritzgießmaschine
- 31: Spritzzylinder
- 32: Schnecke
- 33: Temperiereinrichtung
- 34: Formwerkzeug

- 50: Presswerkzeug
- 51: Pressstempel
- 52: Spule

- 60: Ofen

## Patentansprüche

1. Verfahren zur Herstellung eines Permanentmagneten (20), umfassend die Schritte:
(a) Herstellen einer Mischung (13) umfassend
- ein Pulver (10) eines magnetischen Materials (12) sowie
- eine Binderzusammensetzung (14), die zumindest eine Vorläuferverbindung für Siliziumoxid und zumindest eine Vorläuferverbindung zumindest eines weiteren Oxids umfasst,
(b) Abformen der Mischung (13) zu einem Grünteil (15);
(c) thermisches Behandeln des Grünteils (15) zur Überführung von zumindest Teilen der der Binderzusammensetzung (14) in die Oxide, und
(d) aufeinanderfolgend auf oder zeitgleich mit Schritt (c) Sintern des Grünteils (15) unter Ausbildung einer Glas-, Keramik- oder Glaskeramikmatrix (21) aus den Oxiden, welche die Partikel (11) des magnetischen Materials (12) einbettet;
**dadurch gekennzeichnet, dass** das (b) Abformen durch Pulverspritzgießen (PIM) erfolgt.

2. Verfahren nach Anspruch 1, wobei das Abformen in einem äußeren Magnetfeld erfolgt und/oder das Verfahren ferner einen, nach Schritt (d) erfolgenden Schritt (e) Magnetisieren des magnetischen Materials (12) in einem äußeren Magnetfeld umfasst.

3. Verfahren nach einem der vorhergehenden Ansprüche, wobei die zumindest eine Vorläuferverbindung des zumindest einen weiteren Oxids eine Vorläuferverbindung für ein Oxid MₓO_{y} ist, worin O Sauerstoff bedeutet und M ein kationisches Element ist, insbesondere AI, B, P, Ge, Li, Na, K, Sr, Mg, Ca, Ba, Ti, Zr, Cu, Pb, Zn, Be, Dy, Pr, Nd oder Tb.

4. Verfahren nach einem der vorhergehenden Ansprüche, wobei die zumindest eine Vorläuferverbindung des zumindest einen weiteren Oxids MₓO_{y} eine organische Verbindung des kationisches Elements M umfasst, insbesondere eine Alkoxid-oder Alkylverbindung von diesen.

5. Verfahren nach einem der vorhergehenden Ansprüche, wobei die zumindest eine Vorläuferverbindung für Siliziumoxid ein Siloxan, insbesondere ein Polydialkylsiloxan, und/oder ein Silikat, insbesondere ein Tetraalkylorthosilikat, umfasst.

6. Verfahren nach einem der vorhergehenden Ansprüche, wobei das Wärmebehandeln zur Sinterung des Grünteils bei einer Temperatur erfolgt, die kleiner als eine zur Sinterung des magnetischen Materials (12) geeignete Temperatur ist.

## Claims

1. Process for producing a permanent magnet (20), comprising the steps of:
(a) producing a mixture (13) comprising
- a powder (10) of a magnetic material (12) and
- a binder composition (14) comprising at least one precursor compound for silicon oxide and at least one precursor compound of at least one further oxide,
(b) moulding the mixture (13) to form a green part (15) ;
(c) subjecting the green part (15) to thermal treatment for conversion of at least parts of the binder composition (14) to the oxides, and
(d) successively to or simultaneously with step (c), sintering the green part (15) to form a glass matrix, ceramic matrix or glass-ceramic matrix (21) from the oxides which surround the particles (11) of the magnetic material (12);
**characterized in that** the (b) moulding is effected by powder injection moulding (PIM).

2. Process according to Claim 1, wherein
the moulding is effected in an external magnetic field and/or the process further comprises a step (e), which follows step (d), of magnetizing the magnetic material (12) in an external magnetic field.

3. Process according to either of the preceding claims, wherein
the at least one precursor compound of the at least one further oxide is a precursor compound for an oxide MₓO_{y} in which O is oxygen and M is a cationic element, especially Al, B, P, Ge, Li, Na, K, Sr, Mg, Ca, Ba, Ti, Zr, Cu, Pb, Zn, Be, Dy, Pr, Nd or Tb.

4. Process according to any of the preceding claims, wherein
the at least one precursor compound of the at least one further oxide MₓO_{y} is an organic compound of the cationic element M, especially an alkoxide or alkyl compound thereof.

5. Process according to any of the preceding claims, wherein
the at least one precursor compound for silicon oxide is a siloxane, especially a polydialkylsiloxane, and/or a silicate, especially a tetraalkyl orthosilicate.

6. Process according to any of the preceding claims, wherein
the heat treatment for sintering of the green part is effected at a temperature lower than a temperature suitable for sintering of the magnetic material (12).

## Revendications

1. Procédé de fabrication d'un aimant permanent (20), comprenant les étapes suivantes :
(a) la fabrication d'un mélange (13), comprenant :
- une poudre (10) d'un matériau magnétique (12), ainsi que
- une composition de liant (14), qui comprend au moins un composé précurseur d'oxyde de silicium et au moins un composé précurseur d'au moins un autre oxyde,
(b) le façonnage du mélange (13) en une pièce verte (15) ;
(c) le traitement thermique de la pièce verte (15) pour la transformation d'au moins des parties de la composition de liant (14) en les oxydes, et
(d) successivement à ou simultanément avec l'étape (c), le frittage de la pièce verte (15) avec formation d'une matrice en verre, céramique ou vitrocéramique (21) à partir des oxydes, qui incorpore les particules (11) du matériau magnétique (12) ;
**caractérisé en ce que** (b) le façonnage a lieu par moulage par injection de poudre (PIM).

2. Procédé selon la revendication 1, dans lequel le façonnage a lieu dans un champ magnétique extérieur et/ou le procédé comprend en outre une étape (e) ayant lieu après l'étape (d) : la magnétisation du matériau magnétique (12) dans un champ magnétique extérieur.

3. Procédé selon l'une quelconque des revendications précédentes, dans lequel ledit au moins un composé précurseur dudit au moins un autre oxyde est un composé précurseur d'un oxyde MₓO_{y}, O signifiant l'oxygène et M étant un élément cationique, notamment Al, B, P, Ge, Li, Na, K, Sr, Mg, Ca, Ba, Ti, Zr, Cu, Pb, Zn, Be, Dy, Pr, Nd ou Tb.

4. Procédé selon l'une quelconque des revendications précédentes, dans lequel ledit au moins un composé précurseur dudit au moins un autre oxyde MₓO_{y} comprend un composé organique de l'élément cationique M, notamment un composé d'alcoxyde ou d'alkyle de celui-ci.

5. Procédé selon l'une quelconque des revendications précédentes, dans lequel ledit au moins un composé précurseur d'oxyde de silicium comprend un siloxane, notamment un polydialkylsiloxane, et/ou un silicate, notamment un orthosilicate de tétraalkyle.

6. Procédé selon l'une quelconque des revendications précédentes, dans lequel le traitement thermique pour le frittage de la pièce verte a lieu à une température qui est inférieure à une température appropriée pour le frittage du matériau magnétique (12).
